# FASCICULE DE BREVET EUROPEEN

(11) **EP 0 762 586 B1**
(45) Date de publication et mention de la délivrance du brevet: **08.11.2000**
(21) Numéro de dépôt: 96401828.7
(22) Date de dépôt: 27.08.1996
(51) Int. Cl.: H02B 1/40, A47B 47/05

(54) **Coffret, notamment pour appareils électriques**
Gehäuse für elektrische Geräte
Casing for electrical apparatus

(30) Priorité: 29.08.1995 FR 9510169
(43) Date de publication de la demande: 12.03.1997
(73) Titulaire: LEGRAND, 87045 Limoges (FR); LEGRAND SNC, F-87045 Limoges (FR)
(72) Inventeur: Leneutre, Pascal, 76520 Fresne Le Plan (FR)
(74) Mandataire: CABINET BONNET-THIRION

(56) Documents cités:
- EP-A- 0 351 279
- US-A- 3 843 222
- US-A- 5 081 560

## Description

La présente invention concerne d'une manière générale les coffrets à fixer à un quelconque support vertical, et, par exemple, à un mur.

Elle vise plus particulièrement ceux de ces coffrets qui sont destinés au logement et à la protection d'appareils électriques, et qui comportent, pour ce faire, dans leur volume interne, un châssis, à montants et barreaux, propre au support de ceux-ci.

Plus particulièrement, encore, elle concerne le cas où, pour faciliter le câblage de ces appareils électriques, un tel coffret comporte, de manière distincte, une embase, formant fond, qui est globalement plate, et par laquelle il est adapté à être rapporté sur le support à équiper, un châssis, qui est propre au support d'appareils électriques et un habillage, qui est à rapporter sur l'embase pour former avec celle-ci le volume interne de l'ensemble, et qui comporte, lui-même, de manière distincte, diverses pièces d'habillage, et, notamment, deux plaques d'ajour, l'une supérieure, l'autre inférieure, et deux flasques latéraux.

L'un des problèmes, en l'espèce, est d'assurer l'assemblage de ces divers constituants.

Dans la demande de brevet européen No 0 351 279, l'habillage comporte en façade un cadre monobloc à rapporter sur un châssis, qui comporte à cet effet des piliers, et qui est lui-même à rapporter sur l'embase.

Dans le brevet américain No 3 843 222, l'habillage comporte deux pièces d'ossature, en forme générale de cadre, qui sont disposées parallèlement l'une à l'autre, et qui, conjointement avec des montants s'étendant de l'une à l'autre d'entre elles, assurent le maintien de l'ensemble des pièces d'habillage, et, au lieu et place de l'embase, l'une de ces dernières forme simplement un panneau de fond.

La présente invention a d'une manière générale pour objet une autre disposition permettant de répondre de manière particulièrement simple et sûre à l'assemblage à assurer et conduisant en outre à d'autres avantages.

De manière plus précise, elle a pour objet un coffret du genre précédemment exposé et caractérisé en ce que son habillage comporte deux pièces d'ossature en forme générale de U, qui sont distinctes du châssis et qui, disposées parallèlement l'une à l'autre, le long de deux bords opposés de l'embase, en pratique les bords supérieur et inférieur de celle-ci, assurent, par elles-mêmes, soit directement, soit indirectement, le maintien de l'ensemble des pièces d'habillage, ces deux pièces d'ossature présentant chacune, d'une part, deux piétements, par lesquels elles sont rendues solidaires de l'embase, dans les zones d'angle de celle-ci, par l'intermédiaire du châssis, et, d'autre part, une traverse, qui s'étend à distance de l'embase, parallèlement aux deux bords concernés de celle-ci, en ce que, pour la fixation de l'embase au support, il est associé à l'embase des entretoises d'écartement, à raison d'une par zone de fixation, et en ce que pour le pincement d'une autre pièce, qui est soit un montant appartenant au châssis, soit une entretoise de support sur laquelle est rapporté un tel montant, ces entretoises d'écartement sont en deux pièces, à savoir une pièce arrière et une pièce avant.

Grâce à une telle disposition, l'ensemble de l'habillage est avantageusement organisé autour de deux pièces d'ossature, en forme générale de pontet, sur lesquelles se reprennent, systématiquement, le maintien et/ou la fixation des autres pièces d'habillage à mettre en oeuvre.

Cela est le cas, notamment, des plaques d'ajour supérieure et inférieure, qui, chacune individuellement, sont directement fixées à ces pièces d'ossature.

Cela est le cas, également, des flasques latéraux, qui s'étendent verticalement de l'une à l'autre de celles-ci.

Mais cela peut également être le cas, si désiré, pour d'autres pièces d'habillage, et, par exemple, pour des bandeaux, qui, dûment rapportés en façade sur ces pièces d'ossature, le long de leur traverse, sont aptes à constituer avec des montants latéraux un cadre propre à la mise en place d'une porte.

Il est ainsi avantageusement possible de permettre, avec des constituants de base communs, la réalisation de coffrets répondant, au choix, à des spécifications différentes.

L'embase, et, au moins dans certaines formes de réalisation, les flasques latéraux, pouvant, si désiré, être constitués par des profilés extrudés tronçonnables à la demande, ces coffrets peuvent en outre avantageusement être modulés en hauteur, avec les mêmes pièces d'ossature et les mêmes plaques d'ajour pour leur habillage.

En variante, ou conjointement, ils peuvent également être modulés en profondeur, par insertion d'entretoises de support entre leur embase et les piétements des pièces d'ossature de leur habillage.

Ainsi, globalement, se trouvent conservés, au bénéfice de la standardisation, et donc des coûts, de nombreux constituants communs, et notamment les pièces d'ossature de l'habillage, pour toute une gamme de coffrets de spécifications et/ou de dimensions différentes.

Il en résulte, tout d'abord, que ces entretoises d'écartement maintiennent systématiquement l'embase à distance, légère, du support sur lequel elle est rapportée, au bénéfice de son isolation par rapport à celui-ci.

Il en résulte, également, et surtout, que, les moyens de fixation de l'embase au support traversant, à la faveur de ces entretoises d'écartement, des constituants du châssis interne, le maintien de ce châssis interne sur le support, et donc celui des appareils électriques qu'il porte, peuvent, au moins dans une certaine mesure, être avantageusement conservés, au bénéfice de la sécurité, même dans le cas où, par suite par exemple d'un incendie, l'embase et l'habillage viennent à être endommagés, sinon détruits.

Si désiré, l'embase, et, au moins dans certaines formes de réalisation, l'ensemble de l'habillage, peuvent être réalisés en matière synthétique, au bénéfice d'une isolation générale pour les appareils électriques concernés, sans mise à la terre du coffret.

Dans ce cas, seuls demeurent pour l'essentiel métalliques les constituants du châssis interne, et, notamment, les montants de ce châssis.

Pour un coffret de profondeur relativement réduite, ces montants sont directement adossés à l'embase.

Pour un coffret de profondeur plus grande, ils sont rapportés sur des entretoises de support, et celles-ci sont elles-mêmes directement adossées à l'embase.

Dans une mode de réalisation avantageuse, des entretoises d'écartement comportent une semelle, par laquelle elles sont aptes à s'adosser à la surface arrière de l'embase, et, en saillie sur cette semelle, un embout, par lequel elles sont aptes à s'emboîter dans un évidement prévu à cet effet dans l'embase, avec, traversant l'ensemble, un perçage, pour le passage d'un moyen de fixation, et, en pratique, la pièce arrière de chaque entretoise d'écartement comprend la semelle et l'embout, et la pièce avant, qui est emboîtée dans un évidement de la pièce arrière, présente un rebord en saillie le long d'une portion au moins de sa périphérie pour le pincement d'une autre pièce, cette autre pièce étant soit l'un des montants du châssis de support, pour les coffrets de profondeur relativement réduite, soit l'une des entretoises de support portant ces montants, pour les coffrets de profondeur plus grande.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un coffret suivant l'invention ;
la figure 2 en est, à échelle supérieure, une vue en perspective éclatée ;
la figure 3 est une vue en perspective éclatée qui, déduite de celle de la figure 2, ne porte que sur certains des constituants de ce coffret ;
la figure 4 est, à échelle supérieure, une vue partielle en coupe transversale de ce coffret, suivant la ligne IV-IV de la figure 3 ;
la figure 5 est, sensiblement à l'échelle de la figure 4, une vue en perspective éclatée d'une des entretoises d'écartement mises en oeuvre dans ce coffret ;
la figure 6 est une vue de bout de l'embase de ce coffret, suivant la flèche VI de la figure 3 ;
les figures 7, 8, 9 sont, à échelle différente, diverses vues partielles en perspective d'une des pièces d'ossature de l'habillage du coffret suivant l'invention, vue du côté interne de celui-ci ;
la figure 10 est, à échelle supérieure, une vue partielle en coupe de cette pièce d'ossature, suivant la ligne X-X de la figure 9 ;
la figure 11 est, à l'échelle de la figure 6, une vue de bout d'un des flasques latéraux de ce coffret, suivant la flèche XI de la figure 2 ;
la figure 12 est, de même, une vue de bout d'une baguette d'habillage éventuellement associée à un tel flasque latéral, suivant la flèche XII de la figure 2 ;
la figure 13 est une vue partielle en perspective qui, reprise de celle de la figure 8, illustre l'association d'une pièce de jumelage horizontal à l'une des pièces d'ossature, vue du côté interne du coffret ;

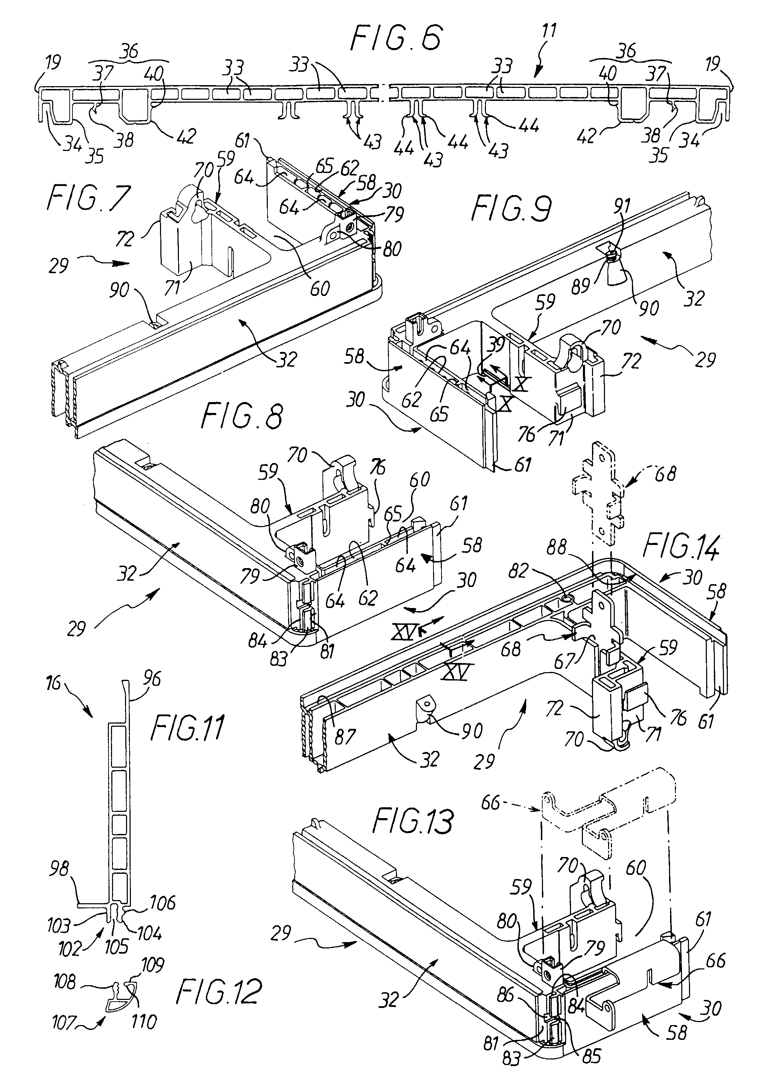

la figure 13 est une autre vue partielle en perspective d'une des pièces d'ossature, vue du côté externe du coffret, et illustrant l'association d'une pièce de jumelage vertical à cette pièce d'ossature ;

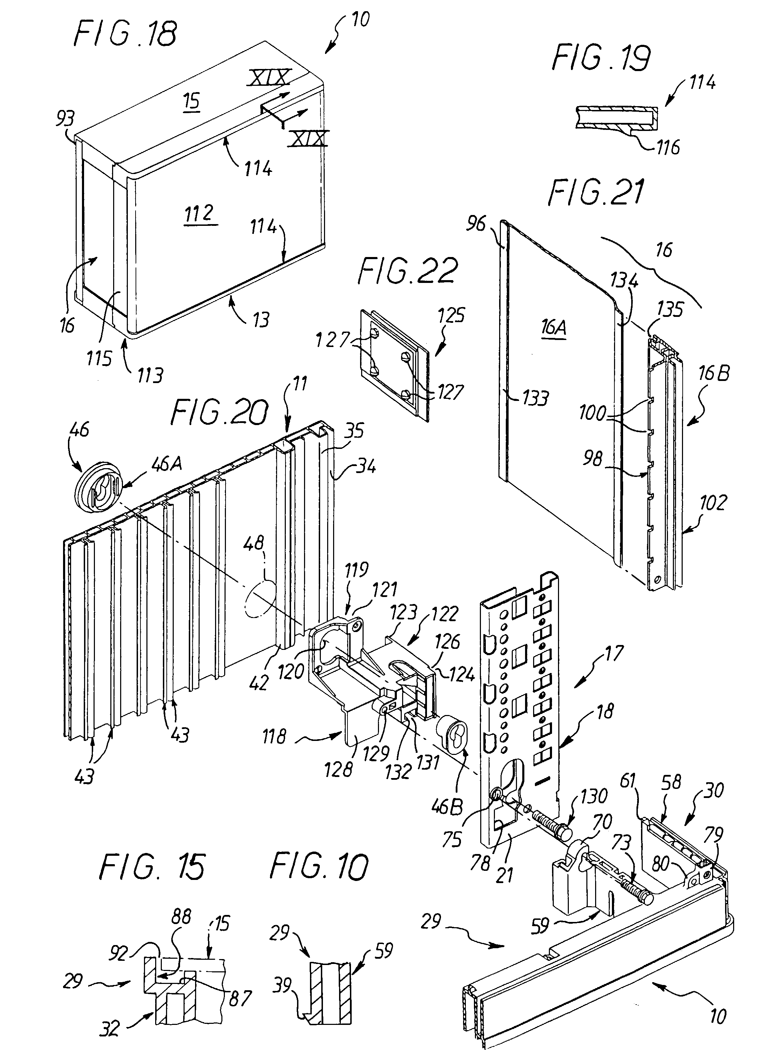

la figure 15 est, à échelle différente, une vue partielle en coupe transversale de cette pièce d'ossature, suivant la ligne XV-XV de la figure 14 ;

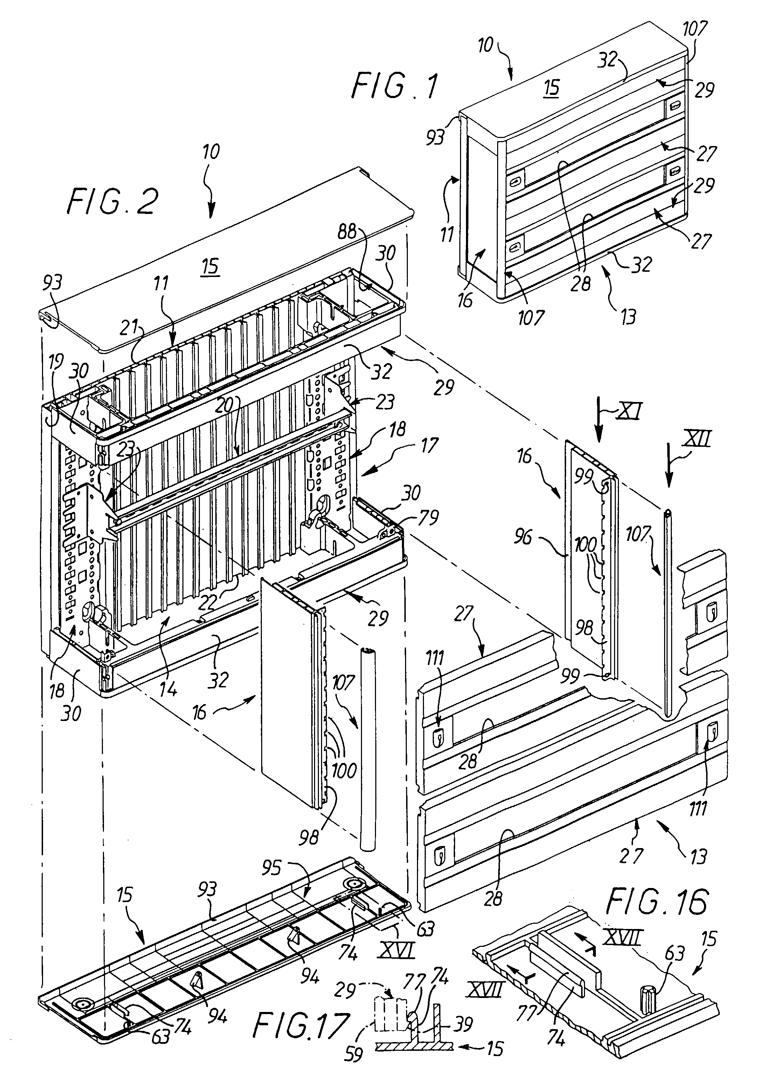

la figure 16 reprend, à échelle supérieure, le détail de la figure 2 qui, relatif à une plaque d'ajour, en l'espèce la plaque d'ajour inférieure, est repéré par un encart XVI sur cette figure 2 ;
la figure 17 est, à échelle supérieure, une vue partielle en coupe de cette plaque d'ajour, suivant la ligne XVII-XVII de la figure 16 ;
la figure 18 est une vue en perspective qui, analogue à celle de la figure 1, se rapporte à une autre variante de réalisation du coffret suivant l'invention ;
la figure 19 est, à échelle supérieure, une vue partielle en coupe d'un des bandeaux que comporte ce coffret dans cette variante de réalisation, suivant la ligne XIX-XIX de la figure 18 ;

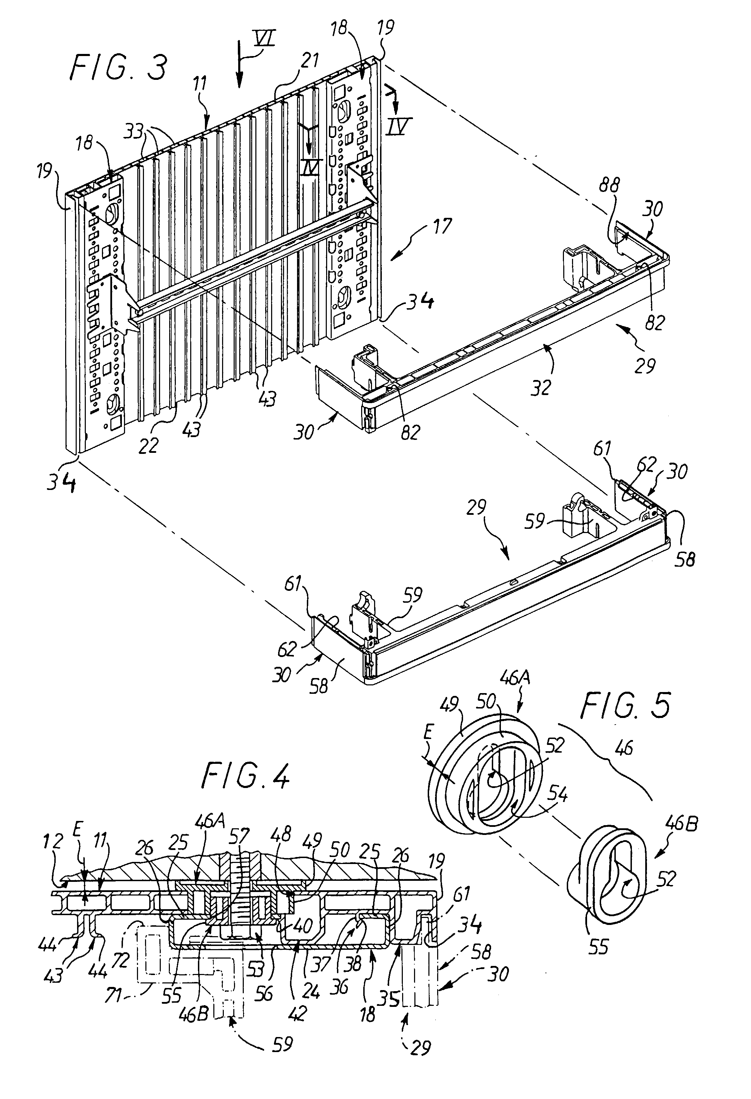

la figure 20 est une vue partielle en perspective qui, analogue à celle de la figure 3, se rapporte à une autre variante de réalisation du coffret suivant l'invention ;
la figure 21 est une vue partielle en perspective d'un des flasques latéraux susceptibles d'être mis en oeuvre dans cette variante de réalisation ;
la figure 22 est une vue en perspective d'une des joues entretoises également mises en oeuvre dans cette variante de réalisation, vue du côté interne du coffret concerné ;

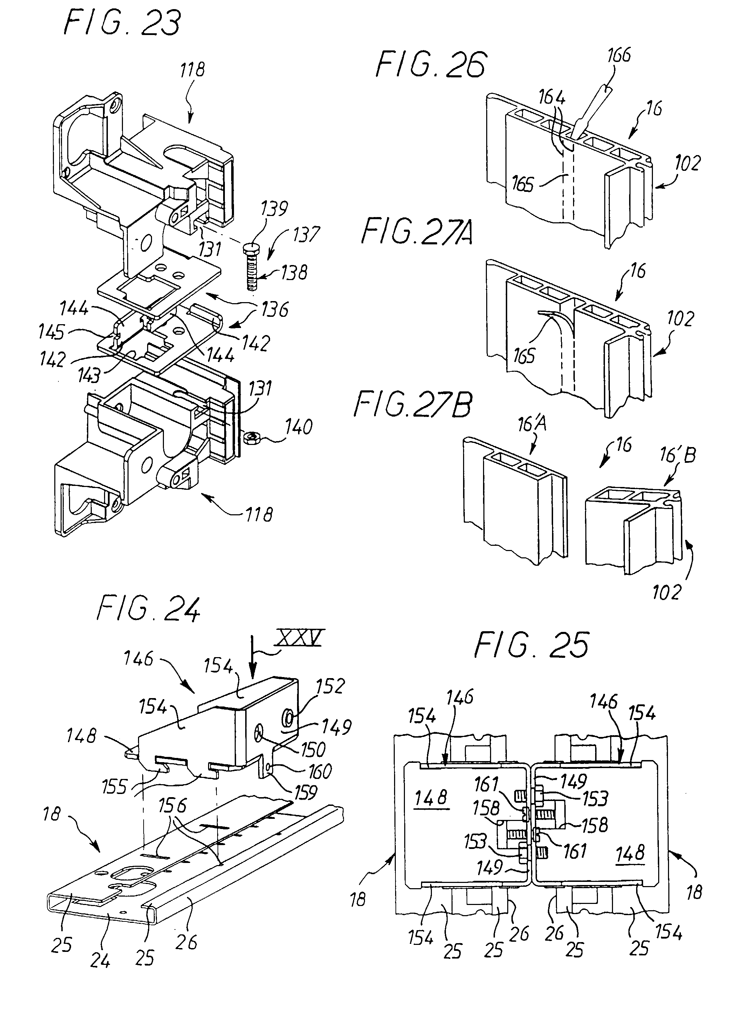

la figure 23 est une vue en perspective éclatée illustrant un jumelage vertical pour cette variante de réalisation ;
la figure 24 est une vue en perspective éclatée illustrant son jumelage horizontal ;
la figure 25 est, suivant la flèche XXV de la figure 24, une vue partielle de l'arrière concernant un tel jumelage horizontal ;
la figure 26 est une vue partielle en perspective d'un des flasques latéraux du coffret suivant l'invention, suivant une variante de réalisation ;
les figures 27A, 27B sont des vues partielles en perspective, qui, analogues à celle de la figure 26, illustrent deux phases successives de la mise en oeuvre de cette variante de réalisation.

Tel qu'illustré sur ces figures, et de manière connue en soi, le coffret 10 suivant l'invention comporte, globalement, de manière distincte, d'une part, une embase 11, formant fond, qui, essentiellement bidimensionnelle, est globalement plate, et par laquelle il est adapté à être rapporté sur un quelconque support 12 vertical, en pratique un mur, figure 4, et, d'autre part, un habillage 13, qui est rapporté sur l'embase 11 pour former avec celle-ci, de manière tridimensionnelle, le volume interne 14 de l'ensemble, figure 2, et qui comporte lui-même, de manière distincte, diverses pièces d'habillage, et, notamment, deux plaques d'ajour 15, l'une supérieure, l'autre inférieure, et deux flasques latéraux 16.

En pratique, l'embase 11 a, en plan, un contour globalement quadrangulaire, et, par exemple, rectangulaire.

S'agissant, à titre d'exemple, du logement d'appareils électriques non représentés, il est prévu, dans le volume interne 14 du coffret 10, un châssis 17 propre au support de tels appareils électriques.

De manière connue en soi, le châssis 17 comporte, à la manière d'une échelle, deux montants 18, qui s'étendent verticalement, à distance l'un de l'autre, parallèlement aux bords latéraux 19 de l'embase 11, au voisinage de ceux-ci, et au moins un barreau 20, qui s'étend horizontalement, de l'un à l'autre des montants 18, parallèlement aux bords supérieur 21 et inférieur 22 de l'embase 11, et qui, à ses extrémités, est solidarisé aux montants 18, soit directement, soit indirectement, comme en l'espèce, par l'intermédiaire d'entretoises 23 en forme d'équerre.

Le châssis 17 ne relevant pas, par lui-même, de la présente invention, il ne sera pas décrit plus en détail ici.

Il suffira d'indiquer que, ainsi qu'il est visible pour l'un d'eux sur la figure 4, les montants 18 sont des profilés à section transversale en U largement allongée, dont la partie médiane 24 forme la face avant, et dont la face arrière est formée par des retours en équerre 25, de largeurs différentes, que présentent en direction l'une de l'autre leurs ailes latérales 26.

Ces montants 18 sont en pratique métalliques.

Il en est de même des barreaux 20 et des entretoises 23 par lesquelles ces barreaux 20 sont rapportés sur les montants 18.

Dans les formes de réalisation représentées, l'habillage 13 comporte, en outre, en façade, un ou plusieurs plastrons 27, à raison d'un par barreau 20 du châssis 17.

Ces plastrons 27, qui s'étendent de l'un à l'autre des flasques latéraux 16, sont superposés, de manière coplanaire, les uns aux autres, sur toute la hauteur du coffret 10.

Ils présentent chacun, parallèlement au barreau 20 correspondant, un évidement allongé 28, pour le passage de la partie des appareils électriques portés par un tel barreau 20 laissée accessible à l'usager.

Suivant l'invention, l'habillage 13 comportant deux pièces d'ossature 29, qui, disposées parallèlement l'une à l'autre, le long de deux bords opposés de l'embase 11, en pratique les bords supérieur 21 et inférieur 22 de celle-ci, assurent, par elles-mêmes, soit directement, soit indirectement, le maintien de l'ensemble des pièces d'habillage, et notamment celui des plaques d'ajour 15 et des flasques latéraux 16, ces deux pièces d'ossature 29 sont en forme générale de U et présentent chacune, en pratique d'un seul tenant, suivant des dispositions décrites plus en détail ultérieurement, d'une part, deux piétements 30, par lesquels elles sont rendues solidaires de l'embase 11, dans les zones d'angle de celle-ci, et, d'autre part, une traverse 32, qui s'étend à distance de l'embase 11, parallèlement aux deux bords supérieur 21 et inférieur 22 concernés de celle-ci.

Dans les formes de réalisation représentées, l'embase 11 a, dans son épaisseur, une structure alvéolaire.

En pratique, les alvéoles 33 qu'elle comporte s'étendent parallèlement à ses bords latéraux 19, qui sont verticaux, figures 3 et 6, et ils courent sur toute sa hauteur.

Dans les formes de réalisation représentées, l'embase 11 comporte, pour des raisons qui apparaîtront ci-après, le long de chacun de ses bords latéraux 19, une rainure 34.

En pratique, cette rainure 34 court elle aussi sur toute la hauteur de l'embase 11, et elle est formée à la faveur d'un rebord 35, à structure alvéolaire, qui fait saillie sur la face avant de celle-ci.

Dans les formes de réalisation représentées, et pour des raisons qui apparaîtront également ci-après, l'embase 11 comporte, également, en saillie sur sa face avant, à distance de chacun de ses bords latéraux 19, et parallèlement à ceux-ci, des moyens de crochetage 36.

En pratique, figures 4 et 6, ces moyens de crochetage 36 comportent une lamelle 37, qui court sur toute la hauteur de l'embase 11, et qui, localement, forme, transversalement, un crochet 38 dirigé vers le bord latéral 19 concerné de l'embase 11.

Les moyens de crochetage 36 comportent, en outre, dans les formes de réalisation représentées, un crochet 40, qui, disposé sensiblement à la même hauteur que le crochet 38, est, lui, dirigé du côté opposé au bord latéral 19 concerné de l'embase 11.

En pratique, ce crochet 40 est adossé à une nervure 42, dont la hauteur est sensiblement égale à celle du rebord 35, et qui, comme celui-ci, a une structure alvéolaire.

Dans sa zone médiane, au moins, c'est-à-dire entre les nervures 42 qu'elle comporte, l'embase 11 présente, encore, en saillie sur sa face avant, dans les formes de réalisation représentées, un réseau de nervures 43, qui, parallèles entre elles, s'étendent parallèlement à ses bords latéraux 19.

En pratique, ces nervures 43 s'étendent sur toute la hauteur de l'embase 11, et, suivant un pas régulier, elles sont regroupées par paires, en présentant, dos à dos, pour chaque paire, des retours en équerre 44 dirigés en sens opposés l'un par rapport à l'autre.

Les nervures 43 forment ainsi, par paires, des rails propres à la fixation, et par exemple à l'encliquetage, de quelconques équipements non représentés.

Dans les formes de réalisation représentées, la face arrière de l'embase 11 est rigoureusement plane.

En pratique, l'embase 11 est un profilé extrudé en matière synthétique, susceptible, si désiré, d'être tronçonné à la demande.

Pour la fixation de l'embase 11 au support 12, il est associé, à cette embase 11, dans les formes de réalisation représentées, des entretoises d'écartement 46, à raison d'une par zone de fixation.

En pratique, quatre zones de fixation sont prévues, et il s'agit, globalement, des zones d'angle de l'embase 11.

Tel que représenté sur la figure 4, et tel que schématisé en traits interrompus sur la figure 20, il est pratiqué, dans chacune des zones de fixation de l'embase 11, en bordure de la nervure 42 correspondante de celle-ci, entre cette nervure 42 et les nervures 43, pour l'intervention d'une entretoise d'écartement 46, un évidement 48.

Cet évidement 48, qui a un contour circulaire, mord en pratique, de l'arrière, sur la nervure 42.

Dans les formes de réalisation représentées, les entretoises d'écartement 46, qui sont toutes identiques entre elles, comportent, globalement, une semelle 49, par laquelle elles sont aptes à s'adosser à la face arrière de l'embase 11, en débordant de l'évidement 48 de celle-ci tout autour de cet évidemment 48, et en écartant ainsi de l'épaisseur E de cette semelle 49 l'embase 11 du support 12, et, en saillie sur cette semelle 49, un embout 50, par lequel elles sont aptes à s'emboîter dans l'évidement 48 de l'embase 11, avec, traversant l'ensemble, un perçage 52, pour le passage d'un moyen de fixation 53, en l'espèce une vis.

En pratique, les entretoises d'écartement 46 sont en deux pièces, à savoir, d'une part, une pièce arrière 46A, qui comprend la semelle 49 et l'embout 50, et, d'autre part, une pièce avant 46B, qui, emboîtée dans un évidement 54 de la pièce arrière 46A, autour du perçage 52, présente elle-même en correspondance un perçage 52 identique, et qui, pour le pincement d'une autre pièce, précisée ultérieurement, entre elle et la pièce arrière 46A, présente, en saillie, le long d'une portion au moins de sa périphérie, et, en pratique, le long de la totalité de celle-ci, un rebord 55.

Pour permettre un prépositionnement de l'embase 11 vis-à-vis de ses moyens de fixation 53, les perçages 52 ont, en plan, un contour en trou de serrure.

Préférentiellement, des moyens d'encliquetage sont prévus entre les deux pièces 46A, 46B des entretoises d'écartement 46, pour un attelage l'une à l'autre de ces pièces 46A, 46B, dans un sens, au moins, leur permettant de se maintenir d'elles-mêmes sur l'embase 11 lorsque, avec pincement de la pièce associée, elles sont rapportées sur celle-ci.

En pratique, et pour des raisons qui apparaîtront ultérieurement, ces moyens d'encliquetage sont aptes à assurer l'une ou l'autre de deux positions d'engagement différentes de la pièce avant 46B dans pièce arrière 46A.

Dans la forme de réalisation plus particulièrement représentée sur les figures 1 à 14, la pièce pincée par les entretoises d'écartement 46 est un des deux montants 18 du châssis 17.

En effet, dans cette forme de réalisation, ces deux montants 18 sont l'un et l'autre directement adossés à l'embase 11, en étant en prise avec les moyens de crochetage 36 que comporte en correspondance celle-ci, et chacun de ces montants 18 est ainsi localement pincé par une entretoise d'écartement 46 à chacune de ses extrémités.

Plus précisément, dans cette forme de réalisation, chacun des montants 18 est adossé à l'embase 11 par les retours en équerre 25 de ses ailes latérales 26, avec l'un de ces retours en équerre 25, en l'espèce celui de plus faible largeur, engagé sur le crochet 38 de la lamelle 37 correspondante de l'embase 11, tandis que l'autre, et, donc, celui de plus grande largeur, est engagé sous le crochet 40 de la nervure 42 correspondante de l'embase 11.

En pratique, chacun des montants 18 est au contact du rebord 35 correspondant de l'embase 11 par l'une de ses ailes latérales 26, et, par la partie médiane 24 formant sa face avant, il prend appui sur la nervure 42 correspondante de cette embase 11.

Pour le passage de la pièce avant 46B d'une entretoise d'écartement 46, chacun des montants 18 présente, sur sa partie médiane 24, à chacune de ses extrémités, un évidement 56, et, en correspondance avec celui-ci, celui de ses retours en équerre 25 qui est le plus large présente un évidement 57, de plus faible section de passage, pour que, par son rebord 55, cette pièce avant 46B puisse effectivement pincer ce retour en équerre 25 entre elle et la pièce arrière 46A dans l'évidement 54 de laquelle elle est alors engagée.

Ainsi qu'on le notera, et comme déjà précédemment évoqué, les moyens de fixation 53 assurant la fixation de l'embase 11 au support 12 traversent ainsi localement les montants 18 du châssis 17, en sorte que, même dans le cas d'une élimination de cette embase 11 et des entretoises d'écartement 46, par exemple à la suite d'un incendie, ils sont encore en mesure d'assurer, par simple accrochage, le maintien des montants 18 sur le support 12, et, donc, le maintien sur celui-ci du châssis 17 et des appareils électriques portés par ce dernier.

Dans les formes de réalisation représentées, les deux pièces d'ossature 29 sont identiques l'une à l'autre.

Il s'agit, en outre, de pièces présentant un plan médian de symétrie, perpendiculairement à leur traverse 32.

Ces deux pièces d'ossature 29 peuvent ainsi chacune intervenir indifféremment le long du bord supérieur 21 de l'embase 11 ou le long du bord inférieur 22 de celle-ci, en étant alors disposées symétriquement l'une par rapport à l'autre par rapport au plan de symétrie correspondant de cette embase 11.

En pratique, ces pièces d'ossature 29 sont en matière synthétique.

Dans les formes de réalisation représentées, chacun des piétements 30 de ces pièces d'ossature 29 comporte, parallèlement l'un à l'autre, et sensiblement perpendiculairement à la traverse 32, deux jambages 58, 59, en formant ainsi, à la manière d'une arche, un évidement 60 propre au passage d'un quelconque équipement, et, par exemple, d'une quelconque goulotte non représentée.

Le jambage 58, qui est le plus externe, s'étend à l'extrémité de la traverse 32, tandis que le jambage 59, qui est le plus interne, s'étend en retrait par rapport à cette extrémité.

Ces deux jambages 58, 59 ont globalement une même longueur.

Dans la forme de réalisation représentée, ils ont globalement, l'un et l'autre, dans leur épaisseur, une structure alvéolaire, et il en est de même de la traverse 32.

Le jambage 58 le plus externe comporte, en saillie, sur toute sa largeur, à son extrémité, le long de son flanc externe, une languette 61, pour son emboîtement dans une rainure.

Dans la forme de réalisation plus particulièrement représentée sur les figures 1 à 14, cette rainure est la rainure 34 correspondante de l'embase 11, tel que schématisé en traits interrompus sur la figure 4.

Le jambage 58 forme, en outre, latéralement, sur sa tranche, du côté interne du coffret 10, une feuillure 62, qui, pour l'emboîtement d'un flasque latéral 16, court sur toute sa longueur.

Le long de cette feuillure 62, les alvéoles internes qu'il comporte sont mis à profit pour la formation de deux évidements 64, qui, séparés par une cloison 65, permettent, si désiré, l'établissement, comme représenté à la figure 12, d'une pièce de jumelage horizontal 66.

De même, mais du côté externe du coffret 10, le jambage 59 le plus interne des piétements 30 des pièces d'ossature 29 forme, localement, sur sa tranche, un évidement 67, pour l'établissement, si désiré, d'une pièce de jumelage vertical 68, comme représenté à la figure 13.

Ainsi, chacun des piétements 30 d'une pièce d'ossature 29 comporte, globalement, au moins un évidement, 64 ou 67, pour la mise en place d'au moins une pièce de jumelage, 66 ou 68.

Du côté interne du coffret 10, le jambage 59 le plus interne comporte, en outre, en saillie, à son extrémité, une oreille 70, pour sa fixation à une autre pièce, qui, en l'espèce, est, dans tous les cas, le montant 18 correspondant du châssis 17.

En pratique, cette oreille 70 s'étend parallèlement à la traverse 32, à la faveur d'un retour en équerre 71 du jambage 59.

En pratique, également, ce retour en équerre 71 comporte, lui-même, en direction opposée à la traverse 32, un retour en équerre 72, pour l'emboîtement de l'ensemble sur l'arête correspondante du montant 18 concerné, tel que schématisé en traits interrompus sur la figure 4, et, ainsi, pour un appui sur ce montant 18 suivant deux faces orthogonales de celui-ci, au profit d'un bon calage sur ce montant 18.

Par exemple, et tel que représenté pour l'une d'elles à la figure 17, la fixation des pièces d'ossature 29 sur les montants 18 du châssis 17 se fait à l'aide de vis 73, qui, après traversée de leurs oreilles 70, viennent chacune en prise avec un rivet taraudé 75 rapporté en correspondance à cet effet sur un tel montant 18.

Dans les formes de réalisation représentées, le jambage 59 le plus interne des piétements 30 des pièces d'ossature 29 comporte, à son extrémité, parallèlement à la traverse 32, un crochet 76, pour sa venue en prise avec le montant 18 correspondant du châssis 17.

Il est ainsi possible d'assurer un maintien provisoire de ces pièces d'ossature 29 sur ces montants 18, avant l'intervention des vis 73, ce qui facilite la mise en place de celles-ci.

En correspondance, la partie médiane 24 des montants 18 formant la face avant de ceux-ci présente, à chacune de ses extrémités, un évidement 78, figure 17, propre à l'intervention d'un tel crochet 76.

Enfin, dans les formes de réalisation représentées, et pour des raisons qui apparaîtront ci-après, le jambage 59 le plus interne des pièces d'ossature 29 comporte, le long de sa tranche, sur une partie de sa longueur à compter de la traverse 32, du côté externe du coffret 10, et face au jambage 58 correspondant, un bourrelet 39, formant crochet, figure 10, pour l'encliquetage de la plaque d'ajour 15 correspondante.

La traverse 32 des pièces d'ossature 29 présente, par ailleurs, côte à côte, en saillie, à chacune de ses extrémités, du côté interne du coffret 10, deux bossages 79, 80.

Pour des raisons qui apparaîtront ci-après, le bossage 79 est creux, et il est ainsi propre à recevoir un écrou non représenté.

Le bossage 80 forme, quant à lui, une oreille, pour la fixation par vissage de la pièce de jumelage horizontal 66.

De même, il est prévu une fixation par vissage de la pièce de jumelage vertical 68.

Au raccordement de leur traverse 32 avec le jambage 58 le plus externe de leurs piétements 30, les pièces d'ossature 29 ont leurs arêtes externes abattues, chacune, par un dégagement 81 sur une partie de leur hauteur à compter de leur côté interne, et, à la faveur de ce dégagement 81, fait saillie, sensiblement dans le prolongement du jambage 58, une languette 83 formant avec le flanc correspondant de ce dégagement 81 une rainure 84.

A mi-longueur de la rainure 84, il est prévu, sur le fond de celle-ci, un perçage 85, pour recevoir, pour des raisons qui apparaîtront ci-après, une vis, et, en correspondance, la languette 83 se trouve localement interrompue par une fente 86 pour faciliter l'engagement de cette vis dans le perçage 85.

La traverse 32 des pièces d'ossature 29 présente ainsi extérieurement à chacune de ses extrémités au moins un perçage 85.

Pour l'encastrement d'une plaque d'ajour 15, les pièces d'ossature 29 comportent, par ailleurs, du côté externe du coffret 10, le long de leur périphérie, une feuillure 88, figures 1, 13 et 14.

Pour l'indexation d'une telle plaque d'ajour 15 préalablement à son encliquetage, la traverse 32 des pièces d'ossature 29 présente corollairement, au voisinage de ses extrémités, deux puits 82, figures 3 et 14.

Pour la fixation d'une telle plaque d'ajour 15, la traverse 32 présente, enfin, de place en place, en oblique, sur sa surface interne, des perçages 89, à la faveur de bossages 90 présents en saillie sur le flanc interne de cette traverse 32.

Préférentiellement, ces bossages 90 sont chacun équipés par avance d'une vis 91, qui, par exemple, est engagée à force dans leur perçage 89, et qui est ainsi en attente.

Ainsi qu'il est visible sur les figures 13 et 14, le fond de la feuillure 88 des pièces d'ossature 29 forme une rigole 87.

En pratique, cette rigole 87 communique avec les dégagements 81 aux extrémités de la traverse 32.

Dans les formes de réalisation représentées, les plaques d'ajour 15 présentent un bord tombé 93 le long de leur bord arrière, pour leur crochetage sur l'embase 11, à l'arrière de celle-ci, à la faveur de l'espace laissé libre entre cette embase 11 et le support 12.

Pour la constitution de moyens d'indexation, les plaques d'ajour 15 présentent, en saillie sur leur face interne, en correspondance avec les puits 82 des pièces d'ossatures 29, des pions 63, figures 2 et 16.

Pour la constitution de moyens d'encliquetage, les plaques d'ajour 15 présentent, corollairement, en saillie sur leur face interne, en correspondance avec le jambage 59 le plus interne des piétements 30 des pièces d'ossature 29, des lamelles 74, figures 2, 16 et 17, qui, le long de leur bord libre, comportent un bourrelet 77 par lequel elles sont aptes à coopérer avec le bourrelet 39 de ce jambage 59, tel que schématisé en traits interrompus sur la figure 17.

Comme précédemment indiqué, les plaques d'ajour 15 s'encastrent par ailleurs dans la feuillure 88 des pièces d'ossature 29.

De préférence, cependant, et tel que schématisé en traits interrompus sur la figure 14, il est prévu, entre leur bord libre et le flanc correspondant de la feuillure 88, un interstice 92, qui court tout au long de leur périphérie.

Pour la plaque d'ajour 15 supérieure, cet interstice 92 permet à l'humidité éventuellement présente sur elle de gagner la rigole 87 sous-jacente, et, par celle-ci, de gagner l'un ou l'autre des dégagements 81, pour être ensuite évacuée vers le bas, suivant des dispositions décrites ultérieurement.

Pour la constitution de moyens de fixation, les plaques d'ajour 15 présentent, de place en place, sur leur face interne, en correspondance avec les bossages 90 des pièces d'ossature 29, des puits 94, inclinés en oblique, pour coopération avec les vis 91 correspondantes.

Elles présentent, en outre, sur cette face interne, un réseau de lignes de prédécoupage 95, pour en faciliter la découpe lorsqu'une quelconque goulotte, non représentée, doit déboucher dans le volume interne 14 du coffret 10.

Dans la forme de réalisation plus particulièrement représentée sur les figures 1 à 14, les flasques latéraux 16, qui sont identiques entre eux, sont chacun d'un seul tenant, en matière synthétique.

Ils présentent, en saillie, sur toute leur hauteur, le long de leur bord arrière, une languette 96, pour leur engagement dans une rainure, en l'espèce la rainure 34 correspondante de l'embase 11.

Ils présentent, en outre, sur toute leur hauteur, le long de leur bord avant, un retour en équerre 98, pour leur fixation aux pièces d'ossature 29.

A cet effet, ce retour en équerre 98 présente, à chacune de ses extrémités, un perçage 99, figure 2, pour le passage d'une vis, non représentée, destinée à coopérer avec l'écrou mis en place dans le bossage 79 correspondant des pièces d'ossature 29.

Pour des raisons qui apparaîtront ci-après, ce retour en équerre 98 est par ailleurs affecté de place en place d'encoches 100 le long de son bord libre.

Entre leur languette 96 et leur retour en équerre 98, les flasques latéraux 16 ont, dans leur épaisseur, une structure alvéolaire.

Dans la forme de réalisation représentée, ils présentent, en outre, le long de leur bord avant, en saillie sur le retour en équerre 98, des moyens d'emboîtement 102 permettant, ainsi qu'il apparaîtra ci-après, d'y rapporter une autre pièce.

En pratique, ces moyens d'emboîtement 102 sont formés de deux languettes 103, 104, qui forment entre elles une rainure 105, et dont une, par exemple la languette 104 la plus externe, est striée sur son flanc interne.

En outre, cette languette 104 présente, en saillie sur son flanc externe, un bourrelet 106, qui court sur toute sa hauteur.

Comme déjà indiqué précédemment, les flasques latéraux 16 viennent s'emboîter, le long de leur bord supérieur et le long de leur bord inférieur, dans la feuillure 62 du piétement 30 correspondant des pièces d'ossature 29.

Lorsque les flasques latéraux 16 sont ainsi emboîtés sur les pièces d'ossature 29, en s'étendant alors verticalement de l'une à l'autre de celles-ci, leur rainure 105 vient en continuité avec la rainure 84 présente dans les dégagements 81 de ces pièces d'ossature 29.

Il est ainsi possible de rapporter sur l'ensemble, le long de chacune des arêtes verticales avant du coffret 10, une baguette d'habillage 107, qui, de ce fait, court en continuité sur la quasi totalité de la hauteur du coffret 10, au bénéfice de l'esthétique de celui-ci.

Ainsi qu'il est mieux visible pour l'une d'elles sur la figure 11, les baguettes d'habillage 107 ainsi mises en oeuvre ont, extérieurement, un profil arrondi en quart de cercle, et elles présentent, en saillie, une languette 108, pour leur engagement à force dans la rainure 84 correspondante des pièces d'ossature 29 et celle 105 du flasque latéral 16 associé.

Elles présentent, en outre, un retour 109, terminé par un bourrelet 110, pour leur encliquetage sur le bourrelet 106 de ce flasque latéral 16.

Ainsi qu'il est aisé de le comprendre, c'est par les baguettes d'habillage 107 que se fait l'évacuation vers le bas de l'humidité ayant éventuellement atteint la rigole 87 de la pièce d'ossature 29 supérieure.

Les plastrons 27 portent sur les retours en équerre 98 des flasques latéraux 16, en se positionnant en hauteur le long de ceux-ci grâce à leurs encoches 100.

Pour leur fixation, ces plastrons 27 présentent, à chacune de leurs extrémités, un verrou 111, de type quart de tour, dont le pêne, non visible sur les figures, vient se prendre derrière le retour en équerre 98 du flasque latéral 16 correspondant.

Au montage, les montants 18 du châssis 17 sont d'abord rapportés sur l'embase 11.

Par exemple, ils peuvent être encliquetés de l'avant sur les moyens de crochetage 36 que comporte celle-ci.

Mais, préférentiellement, ils sont coulissés sur ces moyens de crochetage 36, à compter d'une des extrémités de ces derniers.

Quoi qu'il en soit, ils sont alors en prise avec ces moyens de crochetage 36.

Il est procédé ensuite à la mise en place des entretoises d'écartement 46, puis à la fixation au support 12 de l'embase 11 ainsi équipée des montants 18.

Après complètement du châssis 17, il est procédé à la mise en place des appareils électriques concernés sur les barreaux 20 de ce châssis 17, puis au câblage de ces appareils électriques.

Une fois ce câblage terminé, l'habillage 13 est à son tour mis en place, pour le complètement du coffret 10.

Par exemple, il est procédé successivement à la mise en place de la pièce d'ossature 29 inférieure, des flasques latéraux 16, et de la pièce d'ossature 29 supérieure.

En pratique, les pièces d'ossature 29 sont alors chacune fixées par vissage aux montants 18 du châssis 17 par leurs piétements 30.

Plus précisément, elles sont fixées aux montants 18 de ce châssis 17 par l'oreille 70 que présente le jambage 59 le plus interne de leurs piétements 30.

Après leur découpe éventuelle suivant le profil des goulottes dans lesquelles sont par ailleurs logés les câbles électriques assurant la desserte des appareils électriques concernés, il est procédé ensuite à la mise en place des plaques d'ajour 15.

Enfin, il est procédé à la mise en place des baguettes d'habillage 107 et à celle des plastrons 27.

Si désiré, deux coffrets 10 peuvent être disposés côte à côte, suivant un alignement horizontal.

Dans ce cas, une partie au moins des flasques latéraux 16 par lesquels ils sont adjacents est éliminée, suivant un processus décrit plus en détail ultérieurement, pour le passage éventuel d'une ou plusieurs goulottes horizontales, et il est établi, de l'une à l'autre de leurs pièces d'ossature 29, des pièces de jumelage horizontal 66, pour leur solidarisation l'un à l'autre.

De même, deux coffrets 10 peuvent être superposés, suivant un alignement vertical.

Dans ce cas, les plaques d'ajour 15 correspondantes sont éliminées, ce qui permet le passage éventuel d'une ou plusieurs goulottes verticales, et il est mis en place, de la pièce d'ossature 29 supérieure du coffret 10 inférieur à la pièce d'ossature 29 inférieure du coffret 10 supérieur, des pièces de jumelage vertical 68, pour leur solidarisation l'un à l'autre.

Dans la variante de réalisation représentée sur les figures 18 et 19, l'habillage 13 comporte une porte 112.

Pour le support de cette porte 112, il est rapporté, à l'avant du coffret 10, un cadre 113, formé, d'une part, de deux bandeaux 114, l'un supérieur, l'autre inférieur, qui sont chacun respectivement rapportés, par vissage, sur les pièces d'ossature 29, à la faveur du perçage 85 prévu dans les dégagements 81 de celles-ci, et, d'autre part, de deux montants latéraux 115, qui s'étendent de l'un à l'autre des bandeaux 114, et qui, le long de leur bord arrière, sont équipés de moyens d'emboîtement leur permettant de coopérer en engagement, à la manière des baguettes d'habillage 107 précédentes, et en substitution à celles-ci, avec les moyens d'emboîtement 102 que comportent les flasques latéraux 16.

Préférentiellement, et tel que représenté sur la figure 19, les bandeaux 114 présentent, de place en place, sur leur face interne, des saillies 116, pour assurer l'appui de la porte 112.

Dans la forme de réalisation représentée sur les figures 20 à 25, qui correspond à un coffret 10 de profondeur plus importante que celle du coffret 10 précédent, les montants 18 du châssis 17 sont rapportés sur des entretoises de support 118, qui interviennent à leurs extrémités, et qui, au lieu de ces montants 18, sont directement adossées à l'embase 11.

Ces entretoises de support 118 sont préférentiellement métalliques.

Dans la pratique, elles sont préférentiellement fixées en atelier à l'embase 11, par exemple par deux rivets, non représentés.

Ces entretoises de support 118 ne seront pas décrites en détail ici.

Seuls en seront décrits les éléments essentiels.

De ce point de vue, ces entretoises de support 118 comportent, tout d'abord, à l'arrière, une semelle 119 par laquelle elles sont chacune localement pincées par une entretoise d'écartement 46 à chacune des zones de fixation de l'embase 11.

Cette semelle 119 présente donc un évidement 120 pour l'intervention d'une telle entretoise d'écartement 46, aussi bien que pour le passage du moyen de fixation 53 correspondant, qui, en pratique n'est pas représenté sur la figure 17.

Ainsi qu'on le comprendra, c'est parce que la semelle 119 des entretoises de support 118 ainsi pincée par une entretoise d'écartement 46 a une épaisseur supérieure à celle des retours en équerre 25 des montants 18 que, comme indiqué ci-dessus, les moyens d'encliquetage intervenant entre les deux pièces 46A, 46B constitutives des entretoises d'écartement 46 autorisent deux positions d'engagement différentes entre celles-ci.

Pour son engagement sur la nervure 42 correspondante de l'embase 11, la semelle 119 des entretoises de support 118 présente par ailleurs, sur sa face arrière, un dégagement 121.

Latéralement, les entretoises de support 118 comportent un prolongement 122, par lequel elles établissent localement une solution de continuité entre l'embase 11 et le jambage 58 le plus externe du piétement 30 correspondant des pièces d'ossature 29.

Sur son bord arrière, ce prolongement 122 présente, en saillie, une languette 123, pour son emboîtement dans la rainure 34 correspondante de l'embase 11.

Le long de son bord avant, il présente un dégagement 124, pour constituer, avec une joue entretoise 125 qui lui est dûment rapportée, une rainure 126 propre à l'engagement de la languette 61 du jambage 58 le plus externe du piétement 30 correspondant des pièces d'ossature 29.

Par exemple, la joue entretoise 125, qui est représentée isolément sur la figure 19, est rapportée par simple emboîtement sur le prolongement 122 des entretoises de support 118.

Elle présente à cet effet en saillie sur sa face interne des ergots 127 propres à s'engager dans des perçages complémentaires prévus en correspondance à cet effet sur la face externe de ce prolongement 122.

A l'avant, les entretoises de support 118 présentent une platine 128, pour l'appui des montants 18, et un perçage taraudé 129, pour la fixation de ceux-ci, cette fixation se faisant à l'aide de vis 130.

Pour des raisons qui apparaîtront ci-après, les entretoises de support 118 présentent, enfin, perpendiculairement à leur semelle 119 et à leur platine 128, une rainure 131, qui, sur une partie au moins de sa longueur à compter de la platine 128, est ouverte longitudinalement par une fente 132 de largeur inférieure à sa propre largeur.

Comme précédemment, les flasques latéraux 16 peuvent être d'un seul tenant en matière synthétique.

Dans la forme de réalisation représentée, ils sont cependant formés chacun de deux pièces, à savoir, une pièce arrière 16A, en métal, et une pièce avant 16B, en matière synthétique.

Par un repli 133 de son bord arrière, la pièce arrière 16A forme la languette 96 propre à un emboîtement dans la rainure 34 correspondante de l'embase 11.

Par un décalage transversal de son bord avant, elle forme, corollairement, une languette 134, pour son engagement dans une rainure 135 prévue à cet effet le long du bord arrière de la pièce avant 16B.

Le long de son bord avant, cette pièce avant 16B comporte, par ailleurs, à la manière des flasques latéraux 16 précédents, un retour en équerre 98, à encoches 100, et des moyens d'emboîtement 102.

Aux entretoises de support 118, il est associé, comme représenté à la figure 20, des pièces de jumelage vertical 136, lorsque deux coffrets 10 doivent être superposés l'un à l'autre en hauteur.

En pratique, ces pièces de jumelage vertical 136 sont de simples pièces d'écartement, qui, superposées l'une à l'autre, sont insérées entre les deux entretoises de support 118 concernées.

Celles-ci sont ensuite attelées l'une à l'autre par un boulon 137, dont la vis 138 est insérée par sa tête 139 dans la rainure 131 de l'une de ces entretoises de support 118 tandis que l'écrou 140 est inséré dans la rainure 131 de l'autre de celles-ci.

Dans la forme de réalisation représentée, les pièces de jumelage vertical 136 sont identiques l'une à l'autre, et elles se présentent sous la forme de simples plaquettes, qui, pour leur appui relatif, comportent des replis en équerre 142.

Par exemple, et tel que représenté, deux replis en équerre 142 sont prévus.

L'un s'étend le long d'un des bords de la plaquette correspondante, à la manière d'un bord tombé.

L'autre est formé à la faveur d'un crevé 143 de cette plaquette, et, ce crevé 143 ayant deux portions de largeurs différentes, il appartient à une patte 144 qui, par des encoches latérales 145, permet aux deux plaquettes concernées d'être solidarisées l'une à l'autre par simple crochetage.

Il suffit, pour cela, d'engager l'une, par sa patte 144, dans la portion de plus grande largeur du crevé 143 de l'autre, puis de la déplacer parallèlement à cette dernière jusqu'à ce que, par ses encoches latérales 145, sa patte 144 s'engage sur les bords de la portion de moindre largeur du crevé 143 de celle-ci.

Corollairement, il est associé aux montants 18 du châssis 17, des pièces de jumelage horizontal 146.

Ces pièces de jumelage horizontal 146 présentent une aile 148, par laquelle elle sont adaptées à venir porter sur un montant 18, et, plus précisément, sur les retours en équerre 25 de ses ailes latérales 26, et une aile 149, par laquelle elles sont destinées à être solidarisées, par vissage, l'une à l'autre, cette aile 149 présentant, d'une part, un perçage lisse 150, et, d'autre part, un perçage taraudé 152, pour l'intervention de deux vis 153.

L'aile 149 présente, le long des bords latéraux de l'aile 148, des retours 154, qui, a leur base, forment des crochets 155, pour le crochetage de l'ensemble sur un montant 18, ce montant 18 présentant à cet effet des fentes ou encoches 156 sur ses propres retours en équerre 25.

A la faveur d'un crevé 158 de l'aile 148, l'aile 149 se prolonge, localement, du côté de cette aile 148, par une patte 159, qui présente un perçage taraudé 160 pour l'intervention d'une vis 161.

Lorsqu'une telle pièce de jumelage horizontal 146 a été crochetée sur un montant 18, les vis 161 la verrouillent en position sur ce montant 18 en venant porter sur l'aile latérale 26 correspondante de celui-ci.

Suivant la variante de réalisation représentée sur la figure 26, qui se rapporte à un flasque latéral 16 réalisé en matière synthétique, et qui est à mettre en oeuvre lors d'un jumelage horizontal de deux coffrets 10, l'un au moins des flasques latéraux 16 est sécable suivant sa hauteur, à la faveur de lignes de prédécoupage 164 qui affectent les deux flancs d'un de ses alvéoles.

Par exemple, et tel que représenté, deux lignes de prédécoupage 164 sont prévues sur le flanc interne de cet alvéole, le long des arêtes de celui-ci, en y délimitant une bande 165, et une troisième ligne de prédécoupage, non visible sur les figures, en affecte le flanc externe, le long de son arête la plus en avant.

Suivant le processus illustré par les figures 26, 27A, 27B, et à l'aide par exemple de la lame d'un tournevis 166, la bande 165 est arrachée, figures 26 et 27A, puis, figure 27B, le flasque latéral 16 est séparé en deux parties, l'une arrière 16'A, qui est éliminée, pour le passage éventuel d'une ou plusieurs goulottes horizontales, l'autre avant 16'B, qui, avec ses moyens d'emboîtement 102, est conservée, pour l'intervention d'une baguette d'habillage 107 ou d'un montant latéral 115 pour cadre de porte, comme précédemment décrit.

## Revendications

1. Coffret du genre comportant, de manière distincte, une embase (11), formant fond, qui est globalement plate, et par laquelle il est adapté à être rapporté sur un quelconque support (12), un châssis (17), qui est propre au support d'appareils électriques, et un habillage (13), qui est à rapporter sur l'embase (11) pour former avec celle-ci le volume interne (14) de l'ensemble, et qui comporte, lui-même, de manière distincte, diverses pièces d'habillage, et, notamment, deux plaques d'ajour (15), l'une supérieure, l'autre inférieure, et des flasques latéraux (16), caractérisé en ce que l'habillage (13) comporte deux pièces d'ossature (29) en forme générale de U qui sont distinctes du châssis (17) et qui, disposées parallèlement l'une à l'autre, le long de deux bords (21, 22) opposés de l'embase (11), assurent, par elles-mêmes, soit directement, soit indirectement, le maintien de l'ensemble des pièces d'habillage (15, 16 ...), ces deux pièces d'ossature (29) présentant chacune, d'une part, deux piétements (30), par lesquels elles sont rendues solidaires de l'embase (11), dans les zones d'angle de celle-ci, par l'intermédiaire du châssis (17), et, d'autre part, une traverse (32), qui s'étend à distance de l'embase (11), parallèlement aux deux bords (21, 22) concernés de celle-ci, en ce que, pour la fixation de l'embase (11) au support (12), il est associé à l'embase (11) des entretoises d'écartement (46), à raison d'une par zone de fixation, et en ce que pour le pincement d'une autre pièce, qui est soit un montant (18) appartenant au châssis (17), soit une entretoise de support (118) sur laquelle est rapporté un tel montant (18), ces entretoises d'écartement (46) sont en deux pièces, à savoir une pièce arrière (46A) et une pièce avant (46B).

2. Coffret suivant la revendication 1, caractérisé en ce que l'embase (11) a une structure alvéolaire dans son épaisseur.

3. Coffret suivant la revendication 2, caractérisé en ce que les alvéoles (33) de l'embase (11) s'étendent parallèlement à ses bords latéraux (19).

4. Coffret suivant l'une quelconque des revendications 1 à 3, caractérisé en ce que l'embase (11) comporte une rainure (34) le long de chacun de ses bords latéraux (19).

5. Coffret suivant la revendication 4, caractérisé en ce que la rainure (34) est formée à la faveur d'un rebord (35) qui fait saillie sur la face avant de l'embase (11).

6. Coffret suivant l'une quelconque des revendications 1 à 5, caractérisé en ce que l'embase (11) comporte, en saillie sur sa face avant, à distance de chacun de ses bords latéraux (19), et parallèlement à ceux-ci, des moyens de crochetage (36).

7. Coffret suivant la revendication 6, caractérisé en ce que les moyens de crochetage (36) comportent une lamelle (37) qui, localement, forme transversalement un crochet (38) dirigé vers le bord latéral (19) concerné de l'embase (11).

8. Coffret suivant l'une quelconque des revendications 6, 7, caractérisé en ce que les moyens de crochetage (36) comportent un crochet (40) dirigé du côté opposé au bord latéral (19) concerné de l'embase (11).

9. Coffret suivant la revendication 8, caractérisé en ce que le crochet (40) est adossé à une nervure (42) que l'embase (11) présente en saillie sur sa face avant.

10. Coffret suivant l'une quelconque des revendications 1 à 9, caractérisé en ce que, dans sa zone médiane, au moins, l'embase (11) présente, en saillie sur sa face avant, un réseau de nervures (43) qui, parallèles entre elles, s'étendent parallèlement à ses bords latéraux (19).

11. Coffret suivant la revendication 10, caractérisé en ce que les nervures (43) sont regroupées par paires, et, pour chaque paire, elles présentent dos à dos des retours en équerre (44) dirigés en sens opposés l'un par rapport à l'autre.

12. Coffret suivant l'une quelconque des revendications 1 à 11, caractérisé en ce que l'embase (11) est un profilé extrudé en matière synthétique.

13. Coffret suivant l'une quelconque des revendications 1 à 12, caractérisé en ce que les entretoises d'écartement (46) comportent une semelle (49), par laquelle elles sont aptes à s'adosser à la face arrière de l'embase (11), en écartant ainsi celle-ci du support (12), et, en saillie sur cette semelle (49), un embout (50), par lequel elles sont aptes à s'emboîter dans un évidement (48) de l'embase (11), avec, traversant l'ensemble, un perçage (52), pour le passage d'un moyen de fixation (53) .

14. Coffret suivant la revendication 13, caractérisé en ce que la pièce arrière (46A) de chaque entretoise d'écartement (46) comprend la semelle (49) et l'embout (50), et la pièce avant (46B), qui est emboîtée dans un évidement (54) de la pièce arrière (46A), présente, pour le pincement de ladite autre pièce (18, 118) entre elle et la pièce arrière (46A), un rebord (55) en saillie le long d'une portion au moins de sa périphérie.

15. Coffret suivant l'une quelconque des revendications 1 à 14, caractérisé en ce que chacun des piétements (30) des pièces d'ossature (29) de l'habillage (13) comporte, parallèlement l'un à l'autre, deux jambages (58, 59).

16. Coffret suivant la revendication 15, caractérisé en ce que le jambage (58) le plus externe comporte, en saillie, à son extrémité, une languette (61), pour son emboîtement dans une rainure (34, 126).

17. Coffret suivant l'une quelconque des revendications 15, 16, caractérisé en ce que le jambage (58) le plus externe forme sur sa tranche une feuillure (62), pour l'emboîtement d'un flasque latéral (16).

18. Coffret suivant l'une quelconque des revendications 15 à 17, caractérisé en ce que le jambage (59) le plus interne comporte, à son extrémité, une oreille (70), pour sa fixation à une autre pièce (18).

19. Coffret suivant l'une quelconque des revendications 15 à 18, caractérisé en ce que le jambage (59) le plus interne comporte, à son extrémité, un crochet (76), pour son engagement sur une autre pièce (18).

20. Coffret suivant l'une quelconque des revendications 1 à 19, caractérisé en ce que la traverse (32) des pièces d'ossature (29) présente, côte à côte, en saillie, à chacune des ses extrémités, deux bossages (79, 80), l'un qui est propre à recevoir un écrou, l'autre qui forme une oreille.

21. Coffret suivant l'une quelconque des revendications 1 à 20, caractérisé en ce que, pour l'encastrement d'une plaque d'ajour (15), les pièces d'ossature (29) comportent une feuillure (88) à leur périphérie.

22. Coffret suivant l'une quelconque des revendications 1 à 21, caractérisé en ce que, entre une plaque d'ajour (15) et une pièce d'ossature (29), interviennent des moyens d'indexation (63, 82).

23. Coffret suivant l'une quelconque des revendications 1 à 22, caractérisé en ce que, entre une plaque d'ajour (15) et une pièce d'ossature (29), interviennent des moyens d'encliquetage (77, 39)

24. Coffret suivant l'une quelconque des revendications 1 à 23, caractérisé en ce que, pour la fixation d'une plaque d'ajour (15), la traverse (32) des pièces d'ossature (29) présente, de place en place, en oblique, sur sa surface interne, des perçages (89).

25. Coffret suivant l'une quelconque des revendications 1 à 24, caractérisé en ce que, à chacune de ses extrémités, la traverse (32) des pièces d'ossature (29) présente extérieurement au moins un perçage (85).

26. Coffret suivant l'une quelconque des revendications 1 à 24, caractérisé en ce que chacun des piétements (30) des pièces d'ossature (29) comporte au moins un évidement (64, 67) pour la mise en place d'une pièce de jumelage (66, 68).

27. Coffret suivant l'une quelconque des revendications 1 à 26, caractérisé en ce que les plaques d'ajour (15) présentent un bord tombé (93) le long de leur bord arrière, pour leur crochetage sur l'embase (11).

28. Coffret suivant l'une quelconque des revendications 1 à 27, caractérisé en ce que les flasques latéraux (16) présentent une languette (96) le long de leur bord arrière, pour leur engagement dans une rainure (34).

29. Coffret suivant l'une quelconque des revendications 1 à 28, caractérisé en ce que les flasques latéraux (16) présentent un retour en équerre (98) le long de leur bord avant, pour leur fixation aux pièces d'ossature (29).

30. Coffret suivant l'une quelconque des revendications 1 à 29, caractérisé en ce que les flasques latéraux (16) présentent des moyens d'emboîtement (102) le long de leur bord avant, pour permettre d'y rapporter une autre pièce (107, 115).

31. Coffret suivant l'une quelconque des revendications 28 à 30, caractérisé en ce que les flasques latéraux (16) sont chacun d'un seul tenant en matière synthétique.

32. Coffret suivant la revendication 31, caractérisé en ce que l'un au moins des flasques latéraux (16) est sécable sur sa hauteur.

33. Coffret suivant l'une quelconque des revendications 28 à 30, caractérisé en ce que les flasques latéraux (16) sont formés de deux pièces, à savoir, une pièce arrière (16A), en métal, et une pièce avant (16B), en matière synthétique.

34. Coffret suivant l'une quelconque des revendications 1 à 33, caractérisé en ce que le châssis (17) comportant, à la manière d'une échelle, deux montants (18) et au moins un barreau (20), lesdits montants (18) sont directement adossés à l'embase (11).

35. Coffret suivant les revendications 6 et 34, prises conjointement, caractérisé en ce que les montants (18) du châssis (17) sont en prise avec les moyens de crochetage (36) que comporte en correspondance l'embase (11).

36. Coffret suivant la revendication 34, prises conjointement, caractérisé en ce que les montants (18) du châssis (17) sont pincés localement par une entretoise d'écartement (46) à chacune de leurs extrémités.

37. Coffret suivant l'une quelconque des revendications 1 à 33, caractérisé en ce que le châssis (17) comportant, à la manière d'une échelle, deux montants (18) et au moins un barreau (20), lesdits montants (18) sont rapportés sur des entretoises de support (118) , qui interviennent à leurs extrémités, et qui sont directement adossées à l'embase (11).

38. Coffret suivant la revendication 37, caractérisé en ce que les entretoises de support (118) sont localement pincées par une entretoise d'écartement (46) à chacune des zones de fixation de l'embase (11) .

39. Coffret suivant l'une quelconque des revendications 37, 38, caractérisé en ce que l'habillage (13) comporte une joue entretoise (125) au droit de chaque entretoise de support (118).

40. Coffret suivant l'une quelconque des revendications 34 à 39, caractérisé en ce que les pièces d'ossature (29) sont fixées par leurs piétements (30) aux montants (18) du châssis (17).

41. Coffret suivant les revendications 18 et 40, prises conjointement, caractérisé en ce que les pièces d'ossature (29) sont fixées aux montants (18) du châssis (16) par l'oreille (70) que présente le jambage (59) le plus interne de leurs piétements (30).

42. Coffret suivant les revendications 22 et 40, prises conjointement, caractérisé en ce que les pièces d'ossature (29) sont en prise avec les montants (18) du châssis (16) par le crochet (76) que comporte le jambage (59) le plus interne de leurs piétements (30).

43. Coffret suivant l'une quelconque des revendications 37 à 42, caractérisé en ce qu'il est associé aux entretoises de support (118) des pièces de jumelage vertical (136).

44. Coffret suivant l'une quelconque des revendications 34 à 42, caractérisé en ce qu'il est associé aux montants (18) du châssis (17) des pièces de jumelage horizontal (146).

## Patentansprüche

1. Schrank, der getrennt eine einen Boden bildende, insgesamt flache Grundplatte (11), durch die er dafür ausgelegt ist, an einem beliebigen Träger (12) angebracht zu werden, ein Chassis (17), das zum Tragen von elektrischen Geräten geeignet ist, und eine Verkleidung (13) aufweist, die an der Grundplatte (11) anzubringen ist, um mit dieser das Innenvolumen (14) der Einheit zu bilden, und die ihrerseits getrennt verschiedene Verkleidungsteile umfaßt, und zwar insbesondere zwei Durchbruchsplatten (15), eine obere und eine untere, und seitliche Wangen (16), dadurch gekennzeichnet, daß die Verkleidung (13) zwei vom Chassis (17) getrennte, allgemein U-förmige Skeletteile (29) aufweist, die parallel zueinander längs zweier entgegengesetzter Ränder (21, 22) der Grundplatte (11) angeordnet sind und durch sich selbst entweder direkt oder indirekt den Halt der Gesamtheit der Verkleidungsteile (15, 16...) gewährleisten, wobei diese beiden Skeletteile (29) jeweils einerseits zwei Stützen (30), durch die sie mit der Grundplatte (11) in deren Eckbereichen über das Chassis (17) fest verbunden sind, und andererseits ein Querelement (32) aufweisen, das sich in einem Abstand von der Grundplatte (11) parallel zu ihren beiden betroffenen Rändern (21, 22) erstreckt, daß der Grundplatte (11) für die Befestigung der Grundplatte (11) am Träger (12) Abstandszwischenstücke (46) zugeordnet sind, und zwar eines pro Befestigungsbereich, und daß diese Abstandszwischenstücke (46) zum Einklemmen eines anderen Teils, das entweder ein zum Chassis (17) gehörender Ständer (18) oder ein Tragzwischenstück (118) ist, an dem ein solcher Ständer (18) angebracht ist, aus zwei Teilen bestehen, und zwar einem hinteren Teil (46A) und einem vorderen Teil (46B).

2. Schrank nach Anspruch 1, dadurch gekennzeichnet, daß die Grundplatte (11) in ihrer Dicke eine Zellstruktur besitzt.

3. Schrank nach Anspruch 2, dadurch gekennzeichnet, daß die Zellen (33) der Grundplatte (11) sich parallel zu ihren Seitenrändern (19) erstrecken.

4. Schrank nach einem der Ansprüche 1 bis 3, dadurch gekennzeichnet, daß die Grundplatte (11) längs jedes ihrer Seitenränder (19) eine Nut (34) aufweist.

5. Schrank nach Anspruch 4, dadurch gekennzeichnet, daß die Nut (34) in einer Randleiste (35) gebildet ist, die auf der Vorderseite der Grundplatte (11) vorsteht.

6. Schrank nach einem der Ansprüche 1 bis 5, dadurch gekennzeichnet, daß die Grundplatte (11) auf ihrer Vorderseite vorstehend in einem Abstand von jedem ihrer Seitenränder (19) und parallel zu ihnen Einhakmittel (36) aufweist.

7. Schrank nach Anspruch 6, dadurch gekennzeichnet, daß die Einhakmittel (36) eine Zunge (37) aufweisen, die örtlich in Querrichtung einen Haken (38) bildet, der auf den betroffenen Seitenrand (19) der Grundplatte (11) zu gerichtet ist.

8. Schrank nach einem der Ansprüche 6, 7, dadurch gekennzeichnet, daß die Einhakmittel (36) einen Haken (40) aufweisen, der auf die dem betroffenen Seitenrand (19) der Grundplatte (11) entgegengesetzte Seite zu gerichtet ist.

9. Schrank nach Anspruch 8, dadurch gekennzeichnet, daß der Haken (40) an eine Rippe (42) angesetzt ist, die auf der Vorderseite der Grundplatte (11) vorspringend vorgesehen ist.

10. Grundplatte nach einem der Ansprüche 1 bis 9, dadurch gekennzeichnet, daß die Grundplatte (11) zumindest in ihrem mittleren Bereich auf ihrer Vorderseite vorstehend ein Netz von Rippen (43) aufweist, die zueinander parallel sind und sich parallel zu ihren Seitenrändern (19) erstrecken.

11. Schrank nach Anspruch 10, dadurch gekennzeichnet, daß die Rippen (43) paarweise gruppiert sind und pro Paar Rükken an Rücken rechtwinklige Abwinklungen (44) aufweisen, die in zueinander entgegengesetzten Richtungen gerichtet sind.

12. Schrank nach einem der Ansprüche 1 bis 11, dadurch gekennzeichnet, daß die Grundplatte (11) ein extrudiertes Profilteil aus Kunststoff ist.

13. Schrank nach einem der Ansprüche 1 bis 12, dadurch gekennzeichnet, daß die Abstandszwischenstücke (46) einen Sockel (49) aufweisen, mit dem sie an die Rückseite der Grundplatte (11) angesetzt werden können, indem sie auf diese Weise diese vom Träger (12) entfernen, sowie auf diesem Sockel (49) vorstehend einen Ansatz (50), mit dem sie in eine Aussparung (48) der Grundplatte (11) eintreten können, wobei die Einheit von einer Bohrung (52) für den Durchgang eines Befestigungsmittels (53) durchsetzt ist.

14. Schrank nach Anspruch 13, dadurch gekennzeichnet, daß das hintere Teil (46A) jedes Abstandzwischenstücks (46) den Sockel (49) und den Ansatz (50) aufweist und das vordere Teil (46B), das in eine Aussparung (54) des hinteren Teils (46A) eingesteckt ist, zum Festklemmen des anderen Teils (18, 118) zwischen sich und dem hinteren Teil (46A) eine Randleiste (55) aufweist, die mindestens längs eines Teils seines Umfangs vorsteht.

15. Schrank nach einem der Ansprüche 1 bis 14, dadurch gekennzeichnet, daß jede der Stützen (30) der Skeletteile (29) der Verkleidung (13) parallel zueinander zwei Füße (58, 59) umfaßt.

16. Schrank nach Anspruch 15, dadurch gekennzeichnet, daß der äußere Fuß (58) an seinem Ende vorstehend eine Zunge (61) für sein Einstecken in eine Nut (34, 126) aufweist.

17. Schrank nach einem der Ansprüche 15, 16, dadurch gekennzeichnet, daß der äußere Fuß (58) an seiner Schmalkante einen Falz (62) zum Einstecken einer Seitenwange (16) aufweist.

18. Schrank nach einem der Ansprüche 15 bis 17, dadurch gekennzeichnet, daß der innere Fuß (59) an seinem Ende eine Öse (70) für seine Befestigung an einem anderen Teil (18) aufweist.

19. Schrank nach einem der Ansprüche 15 bis 18, dadurch gekennzeichnet, daß der innere Fuß (59) an seinem Ende einen Haken (76) für seine Einführung in ein anderes Teil (18) aufweist.

20. Schrank nach einem der Ansprüche 1 bis 19, dadurch gekennzeichnet, daß das Querelement (32) der Skeletteile (29) Seite an Seite vorstehend an jedem seiner Enden zwei Erhebungen (79, 80) aufweist, deren eine dafür ausgelegt ist, eine Mutter aufzunehmen, und deren andere eine Öse bildet.

21. Schrank nach einem der Ansprüche 1 bis 20, dadurch gekennzeichnet, daß die Skeletteile (29) zum Einlassen einer Durchbruchsplatte (15) an ihrem Umfang einen Falz (88) aufweisen.

22. Schrank nach einem der Ansprüche 1 bis 21, dadurch gekennzeichnet, daß zwischen einer Durchbruchsplatte (15) und einem Skeletteil (29) Einrastmittel (63, 82) vorgesehen sind.

23. Schrank nach einem der Ansprüche 1 bis 22, dadurch gekennzeichnet, daß zwischen einer Durchbruchsplatte (15) und einem Skeletteil (29) Einklinkmittel (77, 39) vorgesehen sind.

24. Schrank nach einem der Ansprüche 1 bis 23, dadurch gekennzeichnet, daß das Querelement (32) der Skeletteile (29) für die Befestigung einer Durchbruchsplatte (15) stellenweise schräg auf seiner inneren Fläche Bohrungen (89) aufweist.

25. Schrank nach einem der Ansprüche 1 bis 24, dadurch gekennzeichnet, daß das Querelement (32) der Skeletteile (29) an jedem seiner Enden außen mindestens eine Bohrung (85) aufweist.

26. Schrank nach einem der Ansprüche 1 bis 24, dadurch gekennzeichnet, daß jede der Stützen (30) der Skeletteile (29) mindestens eine Aussparung (64, 67) zur Anbringung eines Kopplungsteils (66, 68) aufweist.

27. Schrank nach einem der Ansprüche 1 bis 26, dadurch gekennzeichnet, daß die Durchbruchsplatten (15) längs ihres hinteren Randes einen abgewinkelten Rand (93) für ihre Einhakung an der Grundplatte (11) aufweisen.

28. Schrank nach einem der Ansprüche 1 bis 27, dadurch gekennzeichnet, daß die Seitenwangen (16) längs ihres hinteren Randes eine Zunge (96) für ihre Einführung in eine Nut (34) aufweisen.

29. Schrank nach einem der Ansprüche 1 bis 28, dadurch gekennzeichnet, daß die Seitenwangen (16) längs ihres vorderen Randes eine rechtwinklige Abwinklung (98) für ihre Befestigung an den Skeletteilen (29) aufweisen.

30. Schrank nach einem der Ansprüche 1 bis 29, dadurch gekennzeichnet, daß die Seitenwangen (16) längs ihres vorderen Randes Einsteckmittel (102) aufweisen, um die Anbringung eines anderen Teils (107, 115) zu gestatten.

31. Schrank nach einem der Ansprüche 28 bis 30, dadurch gekennzeichnet, daß die Seitenwangen (16) jeweils einstückig aus Kunststoff bestehen.

32. Schrank nach Anspruch 31, dadurch gekennzeichnet, daß mindestens eine der Seitenwangen (16) auf ihrer Höhe durchtrennbar ist.

33. Schrank nach einem der Ansprüche 28 bis 30, dadurch gekennzeichnet, daß die Seitenwangen (16) von zwei Teilen gebildet sind, und zwar einem hinteren Teil (16A) aus Metall und einem vorderen Teil (16B) aus Kunststoff.

34. Schrank nach einem der Ansprüche 1 bis 33, dadurch gekennzeichnet, daß das Chassis (17) nach der Art einer Leiter zwei Ständer (18) und mindestens eine Schiene (20) besitzt, wobei die Ständer (18) direkt auf die Grundplatte (11) aufgesetzt sind.

35. Schrank nach den Ansprüchen 6 und 34 zusammen, dadurch gekennzeichnet, daß die Ständer (18) des Chassis (17) mit den Einhakmitteln (36), die die Grundplatte (11) in Entsprechung aufweist, in Eingriff sind.

36. Schrank nach Anspruch 34, dadurch gekennzeichnet, daß die Ständer (18) des Chassis (17) örtlich an jedem ihrer Enden durch ein Abstandszwischenstück (46) eingeklemmt sind.

37. Schrank nach einem der Ansprüche 1 bis 33, dadurch gekennzeichnet, daß, wenn das Chassis (17) nach der Art einer Leiter zwei Ständer (18) und mindestens eine Schiene (20) aufweist, diese Ständer (18) an Tragzwischenstücken (118) angebracht sind, die an ihren Enden vorgesehen sind und die direkt an die Grundplatte (11) angesetzt sind.

38. Schrank nach Anspruch 37, dadurch gekennzeichnet, daß die Tragzwischenstücke (118) örtlich in jedem der Befestigungsbereiche der Grundplatte (11) durch ein Abstandszwischenstück (46) eingeklemmt sind.

39. Schrank nach einem der Ansprüche 37, 38, dadurch gekennzeichnet, daß die Verkleidung (13) auf Höhe jedes Tragzwischenstücks (118) eine Zwischenwange (125) aufweist.

40. Schrank nach einem der Ansprüche 34 bis 39, dadurch gekennzeichnet, daß die Skeletteile (29) mit ihren Stützen (30) an den Ständern (18) des Chassis (17) befestigt sind.

41. Schrank nach den Ansprüchen 18 und 40 zusammen, dadurch gekennzeichnet, daß die Skeletteile (29) an den Ständern (18) des Chassis (17) durch die Öse (70) befestigt sind, die der innere Fuß (59) ihrer Stützen (30) aufweist.

42. Schrank nach einem der Ansprüche 22 und 40 zusammen, dadurch gekennzeichnet, daß die Skeletteile (29) mit den Ständern (18) des Chassis (17) durch den Haken (76) in Eingriff sind, den der innere Fuß (59) ihrer Stützen (30) aufweist.

43. Schrank nach einem der Ansprüche 37 bis 42, dadurch gekennzeichnet, daß den Tragzwischenstücken (118) Teile (136) zur vertikalen Kopplung zugeordnet sind.

44. Schrank nach einem der Ansprüche 34 bis 42, dadurch gekennzeichnet, daß den Ständern (18) des Chassis (17) Teile (146) zur horizontalen Kopplung zugeordnet sind.

## Claims

1. A cabinet of the kind comprising, separately, a base (11) forming a back and which is generally flat and by way of which it is adapted to be fitted on to any support (12), a chassis (12) which is suitable for supporting electrical apparatuses, and a casing (13) which is to be fitted on to the base (11) to form therewith the internal volume (14) of the assembly and which itself separately comprises various casing portions and in particular two aperture plates (15), one upper and one lower, and side plates (16), characterised in that the casing (13) comprises two generally U-shaped framework portions (29) which are separate from the chassis (17) and which, disposed in mutually parallel relationship, along two opposite edges (21, 22) of the base (11), ensure by themselves either directly or indirectly that the casing portions (15, 16...) are held together, said two framework portions (29) each having on the one hand two mounting portions (30) by way of which they are fixed with respect to the base (11) in the angle zones thereof by way of the chassis (17) and on the other hand a transverse portion (32) which extends at a spacing from the base (11) in parallel relationship to the two edges (21, 22) in question thereof, that for fixing the base (11) to the support (12), there is associated with the base (11) spacer struts (46), at a rate of one per fixing zone, and that for gripping another portion which is either an upright (18) belonging to the chassis (17) or a support strut (118) to which such an upright (18) is fitted, said spacer struts (46) are in two pieces, namely a rear piece (46A) and a front piece (46B).

2. A cabinet according to claim 1 characterised in that the base (11) is of a cellular structure in its thickness.

3. A cabinet according to claim 2 characterised in that the cells (33) of the base (11) extend parallel to its side edges (19).

4. A cabinet according to any one of claims 1 to 3 characterised in that the base (11) comprises a groove (34) along each of its side edges (19).

5. A cabinet according to claim 4 characterised in that the groove (34) is formed by means of a rim portion (35) which is disposed in projecting relationship on the front face of the base (11).

6. A cabinet according to any one of claims 1 to 5 characterised in that, in projecting relationship on its front face, at a spacing from each of its side edges (19), and in parallel relationship therewith, the base (11) comprises hooking means (36).

7. A cabinet according to claim 6 characterised in that the hooking means (36) comprise a plate (37) which locally forms transversely a hook (38) which is directed towards the side edge (19) in question of the base (11).

8. A cabinet according to either one of claims 6 and 7 characterised in that the hooking means (36) comprise a hook (40) directed on the side opposite to the side edge (19) in question of the base (11).

9. A cabinet according to claim 8 characterised in that the hook (40) bears against a rib (42) which the base (11) has in projecting relationship on its front face.

10. A cabinet according to any one of claims 1 to 9 characterised in that in its central zone at least the base (11) has in projecting relationship on its front face a system of ribs (43) which, parallel to each other, extend parallel to its side edges (19).

11. A cabinet according to claim 10 characterised in that the ribs (43) are grouped in pairs and for each pair they have in back-to-back relationship right-angled flange portions (44) which are directed in opposite directions with respect to each other.

12. A cabinet according to any one of claims 1 to 11 characterised in that the base (11) is a shaped extruded member of synthetic material.

13. A cabinet according to any one of claims 1 to 12 characterised in that the spacer struts (46) comprise a plate portion (49) by way of which they are capable of bearing against the rear face of the base (11), thus moving the latter away from the support (12), and, in projecting relationship on said plate portion (49), a connection portion (50) by way of which they are capable of engaging into an opening (48) in the base (11) with, passing through the assembly, an aperture (52) for passing a fixing means (53).

14. A cabinet according to claim 13 characterised in that the rear piece (46A) of each spacer strut (46) comprises the plate portion (49) and the connection portion (50) and the front piece (46B) which is engaged into an opening (54) in the rear piece (46A) has, for gripping said other piece (18, 118) between it and the rear piece (46A), a rim portion in projecting relationship along at least a portion of its periphery.

15. A cabinet according to any one of claims 1 to 14 characterised in that each of the mounting portions (30) of the framework portions (29) of the casing (13) comprises two legs (58, 59) in mutually parallel relationship.

16. A cabinet according to claim 15 characterised in that the most outward leg (58) comprises in projecting relationship at its end a tongue portion (61) for engagement thereof into a groove (34, 126).

17. A cabinet according to either one of claims 15 and 16 characterised in that the most outward leg (58) forms on its edge a channel (62) for the engagement of a side plate (16).

18. A cabinet according to any one of claims 15 to 17 characterised in that the most inward leg (59) comprises at its end an lug (70) for fixing it to another component (18).

19. A cabinet according to any one of claims 15 to 18 characterised in that the most inward leg (59) comprises at its end a hook (76) for engagement thereof on to another component (18).

20. A cabinet according to any one of claims 1 to 19 characterised in that the transverse portion (32) of the framework portions (29) has in parallel side-by-side relationship at each of its two ends two bosses (79, 80), one which is capable of receiving a nut and the other which forms an lug.

21. A cabinet according to any one of claims 1 to 20 characterised in that, for inserting an aperture plate (15), the framework portions (29) comprise a channel (88) at their periphery.

22. A cabinet according to any one of claims 1 to 21 characterised in that indexing means (63, 82) are operatively disposed between an aperture plate (15) and a framework portion (29).

23. A cabinet according to any one of claims 1 to 22 characterised in that latching means (77, 39) are operatively disposed between an aperture plate (15) and a framework portion (29).

24. A cabinet according to any one of claims 1 to 23 characterised in that, for fixing an aperture plate (15), the transverse portion (32) of the framework portions (29) has apertures (89) at spaced locations in inclined relationship on its internal surface.

25. A cabinet according to any one of claims 1 to 24 characterised in that at each of its ends the transverse portion (32) of the framework portions (29) externally has at least one aperture (85).

26. A cabinet according to any one of claims 1 to 24 characterised in that each of the mounting portions (30) of the framework portions (29) comprises at least one opening (64, 67) for setting in position a coupling portion (66, 68) for forming a paired arrangement.

27. A cabinet according to any one of claims 1 to 26 characterised in that the aperture plates (15) have a dropped edge (93) along their rear edge for hooking engagement thereof on the base (11).

28. A cabinet according to any one of claims 1 to 27 characterised in that the side plates (16) have a tongue portion (96) along their rear edge for their engagement into a groove (34).

29. A cabinet according to any one of claims 1 to 28 characterised in that the side plates (16) have a right-angled flange portion (98) along their front edge for their fixing to the framework portions (29).

30. A cabinet according to any one of claims 1 to 29 characterised in that the side plates (16) have engagement means (102) along their front edge to permit another component (107, 115) to be fitted thereto.

31. A cabinet according to any one of claims 28 to 30 characterised in that the side plates (16) are each in one piece of synthetic material.

32. A cabinet according to claim 31 characterised in that one at least of the side plates (16) is divisible over its height.

33. A cabinet according to any one of claims 28 to 30 characterised in that the side plates (16) are formed in two pieces, namely a rear piece (16A) of metal and a front piece (16B) of synthetic material.

34. A cabinet according to any one of claims 1 to 33 characterised in that the chassis (17) comprising in the manner of a ladder two uprights (18) and at least one cross-bar (20), said uprights (18) bear directly against the base (11).

35. A cabinet according to claims 6 and 34 in combination characterised in that the uprights (18) of the chassis (17) are engaged with the hooking means (36) which the base (11) comprises in corresponding relationship.

36. A cabinet according to claim 34 characterised in that the uprights (18) of the chassis (17) are gripped locally by a spacer strut (46) at each of their ends.

37. A cabinet according to any one of claims 1 to 33 characterised in that the chassis (17) comprising in the manner of a ladder two uprights (18) and at least one cross-bar (20) said uprights (18) are fitted on support struts (111) which are disposed at their ends and which bear directly against the base (11).

38. A cabinet according to claim 37 characterised in that the support struts (118) are locally gripped by a spacer strut (46) at each of the fixing zones of the base (11).

39. A cabinet according to either one of claims 37 and 38 characterised in that the casing (13) comprises a bracing plate (125) in line with each support strut (118).

40. A cabinet according to any one of claims 34 to 39 characterised in that the framework portions (29) are fixed by their mounting portions (30) to the uprights (18) of the chassis (17).

41. A cabinet according to claims 18 and 40 in combination characterised in that the framework portions (29) are fixed to the uprights (18) of the chassis (16) by the lug (70) which is provided on the most inward leg (59) of their mounting portions (30).

42. A cabinet according to claims 22 and 40 in combination characterised in that the framework portions (29) are in engagement with the uprights (18) of the chassis (16) by the hook (76) which is provided on the most inward leg (59) of their mounting portions (30).

43. A cabinet according to any one of claims 37 to 42 characterised in that vertical coupling pieces (136) for forming a paired arrangement are associated with the support struts (118).

44. A cabinet according to any one of claims 34 to 42 characterised in that horizontal coupling pieces (146) for forming a paired arrangement are associated with the uprights (18) of the chassis (17).
